# FASCICULE DE BREVET EUROPEEN

(11) **EP 3 044 278 B1**
(45) Date de publication et mention de la délivrance du brevet: **29.07.2020**
(21) Numéro de dépôt: 14786998.6
(22) Date de dépôt: 02.09.2014
(51) Int. Cl.: C09K 5/04

(54) **FLUIDES DE TRANSFERT DE CHALEUR COMPRENANT DU DIFLUOROMETHANE, DU PENTAFLUOROETHANE, DU TETRAFLUOROPROPENE ET EVENTUELLEMENT DU PROPANE**
WÄRMEÜBERTRAGUNGSFLÜSSIGKEITEN MIT DIFLUORMETHAN, PENTAFLUORETHAN, TETRAFLUORPROPEN UND OPTIONAL PROPAN
HEAT TRANSFER FLUIDS COMPRISING DIFLUOROMETHANE, PENTAFLUOROETHANE, TETRAFLUOROPROPENE AND OPTIONALLY PROPANE

(30) Priorité: 11.09.2013 FR 1358735
(43) Date de publication de la demande: 20.07.2016
(73) Titulaire: Arkema France, 92700 Colombes (FR)
(72) Inventeur: RACHED, Wissam, F-69630 Chaponost (FR)
(74) Mandataire: Dang, Doris
(86) Numéro de dépôt international: PCT/FR2014/052159
(87) Numéro de publication internationale: WO 2015/036677

(56) Documents cités:
- EP-A1- 2 767 569
- WO-A1-2010/002014
- US-A1- 2006 243 945
- US-A1- 2009 250 650

## Description

### DOMAINE DE L'INVENTION

La présente invention concerne des fluides de transfert à base de difluorométhane, de pentafluoroéthane, de tétrafluoropropène et éventuellement du propane, qui présentent des performances élevées et un faible GWP, et sont donc appropriés pour le remplacement des réfrigérants usuels sans modification majeure des équipements.

### ARRIERE-PLAN TECHNIQUE

Les fluides à base de composés fluorocarbonés sont largement utilisés dans les systèmes de transfert de chaleur par compression de vapeur, notamment les dispositifs de climatisation, de pompe à chaleur, de réfrigération ou de congélation. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

Le choix d'un fluide de transfert de chaleur (qui peut être un composé pur ou un mélange de composés) est dicté d'une part par les propriétés thermodynamiques du fluide, et d'autre part par des contraintes supplémentaires. Ainsi, un critère particulièrement important est celui de l'impact du fluide considéré sur l'environnement. En particulier, les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et les fluorooléfines.

Le fluide de transfert de chaleur actuellement utilisé dans les procédés de réfrigération à basse température et/ou refroidissement à température modérée est le R404a (mélange ternaire de 52 % de HFC-143a, de 44 % de HFC-125 et de 4 % de HFC-134a).

Toutefois, les compositions proposées à ce jour pour remplacer le R404a, ayant un GWP de 2100, sans modification majeure des conditions opératoires et/ou équipements ne sont pas satisfaisantes. Ces compositions présentent au moins un des inconvénients suivants : inflammables, peu performantes, un glissement de température à l'évaporateur d'au moins de 3°C et/ou une température sortie compresseur supérieure de 6°C. En outre, elles ne peuvent pas être utilisées dans les équipements munis de compresseurs opérant avec le R404A, à l'exception des compresseurs dotés de la technologie d'injection liquide. Cette technologie est cependant onéreuse et de plus, est inadaptée à la technologie piston.

Les documents US 2009/0250650 et US 2006/243945 décrivent diverses compositions à base de fluorooléfines et leur utilisation en tant que fluides de transfert de chaleur. En particulier, le document décrit le mélange constitué par le HFC-32, le HFC-125 et le HFO-1234ze ainsi que le mélange constitué par le HFC-32, le HFC-125 et le HFO-1234yf. Les compositions indiquées comme étant préférées sont les suivantes :
- 23 % de HFC-32, 25 % de HFC-125 et 52 % de HFO-1234ze ;
- 30 % de HFC-32, 50 % de HFC-125 et 20 % de HFO-1234ze ;
- 40 % de HFC-32, 50 % de HFC-125 et 10 % de HFO-1234yf ;
- 23 % de HFC-32, 25 % de HFC-125 et 52 % de HFO-1234yf ;
- 15 % de HFC-32, 45 % de HFC-125 et 40 % de HFO-1234yf ; et
- 10 % de HFC-32, 60 % de HFC-125 et 30 % de HFO-1234yf.

Le document WO 2010/002014 décrit un réfrigérant non-inflammable à base de HFC-32, HFC-125 et HFO-1234yf. Plusieurs compositions sont divulguées et notamment celle comprenant 15 % de HFC-32, 25 % de HFC-125 et 60 % de HFO-1234yf.

Il est toutefois nécessaire de mettre au point d'autres fluides de transfert de chaleur présentant un potentiel de réchauffement global (GWP) inférieur à celui du R404a, et présentant des performances équivalentes et de préférence améliorées sans les inconvénients précités.

### RESUME DE L'INVENTION

L'invention concerne en premier lieu une composition comprenant :
- de 11 à 13 % de difluorométhane ;
- de 58 à 62 % de pentafluoroéthane ;
- de 18 à 29 % de 2,3,3,3-tétrafluoropropène ; et
- de 0 à 7 % de propane.

La composition, selon l'invention, comprend de préférence:
- de 11 à 13 % de difluorométhane ;
- de 59 à 61 % de pentafluoroéthane ;
- de 25 à 28 % de 2,3,3,3-tétrafluoropropène; et
- de 0 à 3 % en propane, de préférence de 0 à 2 % en propane.

L'invention concerne également l'utilisation de la composition susmentionnée, en tant que fluide de transfert de chaleur dans un circuit de compression de vapeur.

L'invention concerne également une composition de transfert de chaleur comprenant la composition susmentionnée en tant que fluide de transfert de chaleur, et un ou plusieurs additifs choisis parmi les lubrifiants, les stabilisants, les tensioactifs, les agents traceurs, les agents fluorescents, les agents odorants, les agents de solubilisation et leurs mélanges.

L'invention concerne également une installation de transfert de chaleur comprenant un circuit de compression de vapeur contenant la composition susmentionnée en tant que fluide de transfert de chaleur, ou contenant une composition de transfert de chaleur susmentionnée.

Selon un mode de réalisation, cette installation est choisie parmi les installations mobiles ou stationnaires de réfrigération, de chauffage (pompe à chaleur), de climatisation et de congélation.

L'invention concerne également un procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, et le fluide de transfert de chaleur étant la composition susmentionnée.

Selon un mode de réalisation du procédé de chauffage ou de refroidissement, ce procédé est un procédé de refroidissement d'un fluide ou d'un corps, dans lequel la température du fluide ou du corps refroidi est de -40°C à -10°C, et de préférence de -35°C à -25°C, de manière plus particulièrement préférée de -30°C à -20°C, et dans lequel le fluide de transfert de chaleur comprend :
- de 11 à 13 % de difluorométhane, de 58 à 62 % de pentafluoroéthane, de 18 à 29 % de 2,3,3,3-tétrafluoropropène et de 0 à 7 % de propane, de préférence de 11 à 13 % de difluorométhane, de 59 à 61 % de pentafluoroéthane, de 25 à 28 % de 2,3,3,3-tétrafluoropropène et de 0 à 3 % de propane, de préférence de 0 à 2 % en propane; ou

Selon un autre mode de réalisation du procédé de chauffage ou de refroidissement, ce procédé est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C, et dans lequel le fluide de transfert de chaleur comprend :
- de 11 à 13 % de difluorométhane, de 58 à 62 % de pentafluoroéthane, de 18 à 29 % de 2,3,3,3-tétrafluoropropène et de 0 à 7 % de propane, de préférence de 11 à 13 % de difluorométhane, de 59 à 61 % de pentafluoroéthane, de 25 à 28 % de 2,3,3,3-tétrafluoropropène et de 0 à 3 % de propane, de préférence de 0 à 2 % en propane; ou

Selon un autre mode de réalisation du procédé de chauffage ou de refroidissement, ce procédé est un procédé de chauffage d'un fluide ou d'un corps, dans lequel la température du fluide ou du corps chauffé est de 30°C à 80°C, et de préférence de 35°C à 55°C, de manière plus particulièrement préférée de 40°C à 50°C, et dans lequel le fluide de transfert de chaleur comprend :
- de 11 à 13 % de difluorométhane, de 58 à 62 % de pentafluoroéthane, de 18 à 29 % de 2,3,3,3-tétrafluoropropène et de 0 à 7 % de propane, de préférence de 11 à 13 % de difluorométhane, de 59 à 61 % de pentafluoroéthane, de 25 à 28 % de 2,3,3,3-tétrafluoropropène et de 0 à 3 % de propane, de préférence de 0 à 2 % en propane; ou

L'invention concerne également un procédé de réduction de l'impact environnemental d'une installation de transfert de chaleur comprenant un circuit de compression de vapeur contenant un fluide de transfert de chaleur initial (R404a), ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est la composition susmentionnée.

La présente invention permet de surmonter les inconvénients de l'état de la technique. Elle fournit plus particulièrement des fluides de transfert de chaleur présentant un GWP relativement faible, et présentant de meilleures performances énergétiques que le R404a sans modification majeure des conditions opératoires et/ou équipements. En outre, ces fluides ont l'avantage d'être non inflammables, et/ou de présenter un glissement de température à l'évaporateur inférieur de 3°C et/ou une température sortie compresseur qui ne dépasse pas plus de 6°C la température du R404A suivant les mêmes conditions de fonctionnement.

Ceci est accompli grâce à des mélanges comprenant du HFC-32, du HFC-125, du tétrafluoropropène et éventuellement du propane dans les proportions indiquées ci-dessus.

Selon l'invention, le potentiel de réchauffement global (GWP) est défini par rapport au dioxyde de carbone et par rapport à une durée de 100 ans, selon la méthode indiquée dans « The scientific assessment of ozone depletion, 2002, a report of the World Meteorological Association's Global Ozone Research and Monitoring Project ».

Selon l'invention, l'inflammabilité est définie suivant le standard ISO 817 ou l'ASHRAE 34-2010 et la méthode d'essai suivant la ASTM E681 (avec température de test d'inflammabilité de 60°C et humidité relative à 50%).

### DESCRIPTION DE MODES DE REALISATION DE L'INVENTION

L'invention est maintenant décrite plus en détail et de façon non limitative dans la description qui suit.

Par « composé de transfert de chaleur », respectivement « fluide de transfert de chaleur » (ou fluide frigorigène), on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Par « composition de transfert de chaleur » on entend une composition comprenant un fluide de transfert de chaleur et éventuellement un ou plusieurs additifs qui ne sont pas des composés de transfert de chaleur pour l'application envisagée.

Le procédé de transfert de chaleur selon l'invention repose sur l'utilisation d'une installation comprenant un circuit de compression de vapeur qui contient un fluide de transfert de chaleur. Le procédé de transfert de chaleur peut être un procédé de chauffage ou de refroidissement d'un fluide ou d'un corps.

Le circuit de compression de vapeur contenant un fluide de transfert de chaleur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre le fluide de transfert de chaleur et un autre fluide ou corps.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés. Le compresseur peut être entraîné par un moteur électrique ou par une turbine à gaz (par exemple alimentée par les gaz d'échappement d'un véhicule, pour les applications mobiles) ou par engrenage.

L'installation peut comprendre une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, via un fluide caloporteur) est absorbée par le fluide de transfert de chaleur, lors de l'évaporation de ce dernier, et ce à une température relativement faible par rapport à l'environnement. Les procédés de refroidissement comprennent les procédés de climatisation (avec des installations mobiles, par exemple dans des véhicules, ou stationnaires), de réfrigération et de congélation ou de cryogénie.

Dans le cas d'un procédé de chauffage, de la chaleur est cédée (directement ou indirectement, via un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en œuvre le transfert de chaleur est appelée dans ce cas « pompe à chaleur ».

Il est possible d'utiliser tout type d'échangeur de chaleur pour la mise en œuvre des fluides de transfert de chaleur selon l'invention, et notamment des échangeurs de chaleur à co-courant.

Toutefois, selon un mode de réalisation préféré, l'invention prévoit que les procédés de refroidissement et de chauffage, et les installations correspondantes, comprennent un échangeur de chaleur à contre-courant, soit au condenseur, soit à l'évaporateur. En effet, les fluides de transfert de chaleur selon l'invention sont particulièrement efficaces avec des échangeurs de chaleur à contre-courant. De préférence, à la fois l'évaporateur et le condenseur comprennent un échangeur de chaleur à contre-courant.

Selon l'invention, par « échangeur de chaleur à contre-courant », on entend un échangeur de chaleur dans lequel de la chaleur est échangée entre un premier fluide et un deuxième fluide, le premier fluide à l'entrée de l'échangeur échangeant de la chaleur avec le deuxième fluide à la sortie de l'échangeur, et le premier fluide à la sortie de l'échangeur échangeant de la chaleur avec le deuxième fluide à l'entrée de l'échangeur.

Par exemple, les échangeurs de chaleur à contre-courant comprennent les dispositifs dans lesquels le flux du premier fluide et le flux du deuxième fluide sont dans des directions opposées, ou quasiment opposées. Les échangeurs fonctionnant en mode courant croisé à tendance contre-courant sont également compris parmi les échangeurs de chaleur à contre-courant au sens de la présente demande.

La signification des différentes abréviations utilisées pour désigner les différents composés chimiques mentionnés dans la demande est la suivante :
- HFC-125 : pentafluoroéthane ;
- HFC-32 : difluorométhane ;
- HFO-1234ze : 1,3,3,3-tétrafluoropropène ;
- HFO-1234yf : 2,3,3,3-tétrafluoropropène.

Par « composition ternaire » on entend une composition consistant essentiellement en les trois composés cités (HFC-32/HFC-125/ tetrafluoropropène), c'est-à-dire dans laquelle les trois composés cités représentent au moins 99 % (de préférence au moins 99,5 % voire au moins 99,9 %) de la composition.

La composition ternaire préférée est constituée de 12 (±0,2) % du HFC-32, 28 (±0,2) % du HFO-1234yf et 60 (±0,2) % du HFC-125.

Par « composition quaternaire » on entend une composition consistant essentiellement en les quatre composés cités (HFC-32/HFC-125 /tetrafluoropropène/propane), c'est-à-dire dans laquelle les quatre composés cités représentent au moins 99 % (de préférence au moins 99,5 % voire au moins 99,9 %) de la composition.

La composition quaternaire préférée est constituée de 12 (±1) % du HFC-32, 24,4 (±1) % du HFO-1234yf, 62 (±1) % du HFC-125 et de 0,6 (±0,2) % du HC-290.

Sauf mention contraire, dans l'ensemble de la demande les proportions de composés indiquées sont données en pourcentages massiques.

Pour une utilisation dans les procédés de réfrigération à basse température, c'est-à-dire ceux dans lesquels la température du fluide ou du corps refroidi est de -40°C à -10°C, et de préférence de -35°C à -25°C, de manière plus particulièrement préférée de -30°C à -20°C (idéalement d'environ -25°C), on a trouvé que les compositions les plus performantes en remplacement du R404a sont les suivantes :
- de 11 à 13 % de difluorométhane, de 58 à 62 % de pentafluoroéthane, de 18 à 29 % de 2,3,3,3-tétrafluoropropène et de 0 à 7 % de propane, de préférence de 11 à 13 % de difluorométhane, de 59 à 61 % de pentafluoroéthane, de 25 à 28 % de 2,3,3,3-tétrafluoropropène et de 0 à 3 % de propane, de préférence de 0 à 2 % en propane; de préférence de 11 à 13 % de difluorométhane, de 61 à 63 % de pentafluoroéthane, de 24 à 26 % de 2,3,3,3-tétrafluoropropène et de 0,3 à 0,8 % de propane, ou

Pour une utilisation dans :
- les procédés de refroidissement à température modérée, c'est-à-dire ceux dans lesquels la température du fluide ou du corps refroidi est de -15°C à 15°C, de préférence de -10°C à 10°C, de manière plus particulièrement préférée de -5°C à 5°C (idéalement d'environ 0°C), ainsi que
- les procédés de chauffage à température modérée, c'est-à-dire ceux dans lesquels la température du fluide ou du corps chauffé est de 30°C à 80°C, et de préférence de 35°C à 55°C, de manière plus particulièrement préférée de 40°C à 50°C (idéalement d'environ 45°C).

Dans les procédés de « réfrigération à basse température » mentionnés ci-dessus, la température d'entrée du fluide de transfert de chaleur à l'évaporateur est de préférence de -45°C à -15°C, notamment de -40°C à -20°C, de manière plus particulièrement préférée de -35°C à -25°C et par exemple d'environ -30°C ; et la température du début de la condensation du fluide de transfert de chaleur au condenseur est de préférence de 25°C à 80°C, notamment de 30°C à 60°C, de manière plus particulièrement préférée de 35°C à 55°C et par exemple d'environ 40°C.

Dans les procédés de « refroidissement à température modérée » mentionnés ci-dessus, la température d'entrée du fluide de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation du fluide de transfert de chaleur au condenseur est de préférence de 25°C à 80°C, notamment de 30°C à 60°C, de manière plus particulièrement préférée de 35°C à 55°C et par exemple d'environ 50°C. Ces procédés peuvent être des procédés de réfrigération ou de climatisation.

Dans les procédés de « chauffage à température modérée » mentionnés ci-dessus, la température d'entrée du fluide de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation du fluide de transfert de chaleur au condenseur est de préférence de 25°C à 80°C, notamment de 30°C à 60°C, de manière plus particulièrement préférée de 35°C à 55°C et par exemple d'environ 50°C.

Les compositions selon l'invention sont particulièrement intéressantes dans le transport frigorifique.

Il est considéré comme transport frigorifique tout déplacement de produits périssables sous espace réfrigéré. Les produits alimentaires ou pharmaceutiques représentent une partie importante des produits périssables.

Le transport frigorifique peut être effectué par camion, rail ou bateau, éventuellement à l'aide des containers multi-plateformes qui s'adaptent aussi bien sur les camions, les rails ou les bateaux.

Dans le transport frigorifique, la température des espaces réfrigérés est comprise entre -30°C et 16°C. La charge en réfrigérant dans le transport par camion, rail ou containers multi-plateforme varie entre 4 kg et 8 kg de réfrigérant. Les installations dans les bateaux peuvent contenir entre 100 et 500kg.

Le réfrigérant le plus utilisé à ce jour est le R404A.

Les températures de fonctionnement des installations frigorifiques sont fonction des besoins en température de réfrigération et des conditions climatiques extérieures. Une même installation frigorifique doit être capable de couvrir une large gamme de température comprise entre -30°C et 16°C et opérer aussi bien dans des climats froid que chaud.

La condition la plus contraignante en température d'évaporation est -30°C.

Les compositions selon la présente invention peuvent être utilisées pour le remplacement du R407c (mélange ternaire de 52 % de HFC-134a, de 25 % de HFC-125 et de 23 % de HFC-32).

Les fluides de transfert de chaleur mentionnés ci-dessus ne sont pas des quasi-azéotropes et sont très efficaces lorsqu'ils sont correctement couplés à un échangeur de chaleur à contre-courant (avec une différence de température avec le deuxième fluide approximativement constante dans l'échangeur).

Chaque fluide de transfert de chaleur ci-dessus peut être mélangé avec un ou plusieurs additifs pour fournir la composition de transfert de chaleur circulant effectivement dans le circuit de compression de vapeur. Les additifs peuvent notamment être choisis parmi les lubrifiants, les stabilisants, les tensioactifs, les agents traceurs, les agents fluorescents, les agents odorants, les agents de solubilisation et leurs mélanges.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de lubrifiants on peut notamment utiliser des huiles d'origine minérale, des huiles silicones, des paraffines, des naphtènes, des paraffines synthétiques, des alkylbenzènes, des poly-alpha oléfines, des polyalkène glycols, des polyol esters et / ou des polyvinyléthers.

A titre d'agents traceurs (susceptibles d'être détectés) on peut citer les hydrofluorocarbures, les hydrofluorocarbures deutérés, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromaiques hétérocycliques, l'ascaridol, l'o-méthoxy(méthyl)-phénol et les combinaisons de ceux-ci.

Les compositions selon l'invention peuvent également être utiles en tant qu'agent d'expansion, aérosol ou solvant.

### EXEMPLES

Les exemples suivants illustrent l'invention sans la limiter.

### Exemple 1 - méthode de calcul des propriétés des fluides de transfert de chaleur dans les différentes configurations envisagées

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.

Les données disponibles pour chaque corps pur sont la température d'ébullition, la température critique et la pression critique, la courbe de pression en fonction de la température à partir du point d'ébullition jusqu'au point critique, les densités de liquide saturé et de vapeur saturée en fonction de la température.

Les données sur les hydrofluorocarbures sont publiées dans l'ASHRAE Handbook 2005 chapitre 20 et sont aussi disponible sous Refrop (Logiciel développé par NIST pour le calcul des propriétés des fluides frigorigènes).

Les données de la courbe température-pression des hydrofluorooléfines sont mesurées par la méthode statique. La température critique et la pression critique sont mesurées par un calorimètre C80 commercialisé par Setaram.

L'équation RK-Soave utilise des coefficients d'interaction binaire pour représenter le comportement des produits en mélange. Les coefficients sont calculés en fonction des données expérimentales d'équilibre liquide vapeur.

La technique utilisée pour les mesures d'équilibre liquide vapeur est la méthode de cellule statique analytique. La cellule d'équilibre comprend un tube saphir et est équipée de deux échantillonneurs ROLSITM électromagnétiques. Elle est immergée dans un bain cryothermostat (HUBER HS40). Une agitation magnétique à entraînement par champ tournant à vitesse variable est utilisée pour accélérer l'atteinte des équilibres. L'analyse des échantillons est effectuée par chromatographie (HP5890 seriesll) en phase gazeuse utilisant un catharomètre (TCD).

Les mesures d'équilibre liquide vapeur sur le binaire HFC-32 / HFO-1234yf sont réalisées pour les isothermes suivantes : 70°C, 30°C, -10°C.

Les données d'équilibre liquide vapeur pour le binaire HFC-125 / HFC-32 sont disponible sous Refprop. Trois isothermes (-30°C, 0°C et 30°C) sont utilisées pour le calcul des coefficients d'interaction pour ce binaire.

Les mesures d'équilibre liquide vapeur sur le binaire HFC-32 / HFO-1234yf sont réalisées pour l'isotherme suivante : -15°C, 0°C.

Les données d'équilibre liquide vapeur pour le binaire HFC-32 / propane sont disponibles pour les températures suivantes: 5°C, 22°C, 30°C, 40°C.

Les mesures d'équilibre liquide vapeur sur le binaire HFO-1234yf / propane sont réalisées pour l'isotherme suivante : -20°C, -10°C, 55°C.

Les données d'équilibre liquide vapeur pour le binaire HFC-125 / HC-290 sont disponibles pour les températures suivantes: -15°C, 0°C, 15°C, 30°C, 40°C, 50°C.

Pour l'évaluation des performances énergétiques, on considère un système à compression équipé d'un évaporateur et condenseur, d'un compresseur et d'un détendeur.

Le système fonctionne avec 5°C de surchauffe et 1 °C de sous refroidissement. La température d'évaporation saturée vapeur est de -35°C et la température de condensation saturée vapeur est de 45°C.

Le coefficient de performance (COP) est défini comme étant la puissance utile fournie par le système sur la puissance apportée ou consommée par le système.

Dans le tableau qui suit, « *Temp (*°*C)*» désigne la température, « *Temp entrée évap* » désigne la température du fluide à l'entrée de l'évaporateur, « *Temp entrée comp* » désigne la température du fluide à l'entrée du compresseur, « *Temp sortie comp* » désigne la température du fluide à la sortie du compresseur, « *Temp entrée détend* » désigne la température du fluide à l'entrée du détendeur, « P *evap (bar)* » désigne la pression du fluide dans l'évaporateur, « P *cond (bar)* » désigne la pression du fluide dans le condenseur, « glissement » désigne le glissement de température à l'évaporateur, « *Taux (p*/*p)* » désigne le taux de compression, « % *CAP* » désigne la capacité volumétrique du fluide par rapport au fluide de référence indiqué en première ligne, « %COP » désigne le pourcentage du COP du fluide par rapport au fluide de référence indiqué en première ligne.

### Exemple 2 - Résultats pour une réfrigération à basse température, comparaison avec le R404a

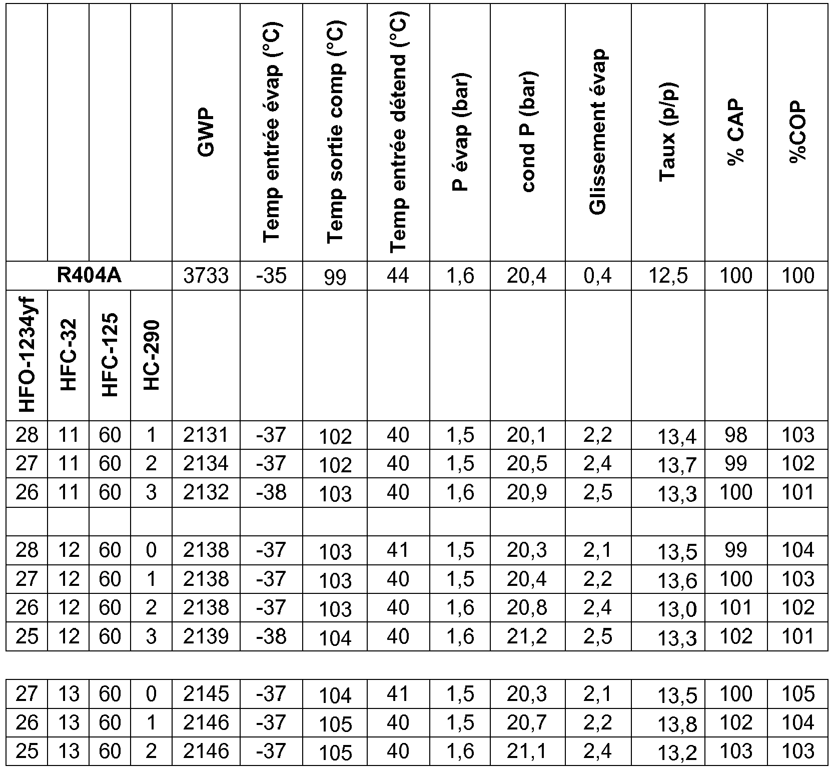

Dans les conditions de cet exemple, les résultats montrent que :
- la température sortie compresseur est équivalente à la température sortie compresseur du R404A avec un maximum à 105°C
- Les pressions dans l'évaporateur et le condenseur sont équivalents aux pressions développées par le R404A.
- Le glissement de température reste inférieur à 3°C et
- la capacité volumetrique est équivalente au R404A (+/- 3%).
- Le COP est > 100% par rapport au R404A

Suivant ces résultats, les mêmes équipements (neuf ou en fonctionnement) destinés au R404A peuvent être utilisés avec les compositions selon l'invention.

Les résultats du tableau exemple 2 montrent les performances avec une température d'évaporation saturée vapeur de -35°C et la température de condensation saturée vapeur de 45°C (climat chaud).

### Exemple 3

On opère dans les mêmes conditions que l'exemple 2 mais avec une composition contenant 25,4 % en poids de HFO-1234yf, 12% en poids de HFC-32, 62% en poids de HFC-125 et 0,6% en poids de HC-290, et on obtient un CAP de 699 KJ/m3, un % CAP par rapport au R404A de 100% et un % de COP de 103.

Avec une composition contenant 24,4 % en poids de HFO-1234yf, 13% en poids de HFC-32, 62% en poids de HFC-125 et 0,6% en poids de HC-290, et on obtient un CAP de 712 KJ/m3, un % CAP par rapport au R404A de 102% et un % de COP de 104.

On a ensuite soumis la composition contenant 24,4 % en poids de HFO-1234yf, 13% en poids de HFC-32, 62% en poids de HFC-125 et 0,6% en poids de HC-290 à un test d'inflammabilité selon la norme ASHRAE 34-2010. L'appareillage utilisé est selon la norme ASTM-E681.

La composition testée et celle obtenue après fuite - WCFF (Worst Case of Fractionation for Flammability) - de composition suivante 12,93 % en poids de HFO-1234yf, 19,75 % en poids de HFC-32, 64,65 % en poids de HFC-125 et 2,67 % en poids de HC-290 sont non inflammables.

## Revendications

1. Composition comprenant :
- de 11 à 13 % en poids de difluorométhane ;
- de 58 à 62 % en poids de pentafluoroéthane ;
- de 18 à 29 % en poids de 2,3,3,3-tétrafluoropropène et
- de 0 à 7 % en poids de propane.

2. Composition selon la revendication 1 comprenant :
- de 11 à 13 % en poids de difluorométhane ;
- de 59 à 61 % en poids de pentafluoroéthane ;
- de 25 à 28 % en poids de 2,3,3,3-tétrafluoropropène et
- de 0 à 3 % en poids de propane, de préférence de 0 à 2 % en poids de propane.

3. Composition selon l'une quelconque des revendications précédentes **caractérisée en ce qu'**elle est ternaire.

4. Composition selon l'une quelconque des revendications 1 à 2 **caractérisée en ce qu'**elle est quaternaire.

5. Composition selon la revendication 1, consistant en :
- 12 (±0,2) % de difluorométhane ;
- 60 (±0,2) % de pentafluoroéthane ; et
- 28 (±0,2) % de 2,3,3,3-tétrafluoropropène.

6. Composition selon la revendication 1, consistant en :
- 12 (±1) % de difluorométhane ;
- 62 (±1) % de pentafluoroéthane ;
- 0,6 (±0,2) % de propane et
- 24,4 (±1) % de 2,3,3,3-tétrafluoropropène.

7. Utilisation d'une composition selon l'une des revendications 1 à 6, en tant que fluide de transfert de chaleur dans un circuit de compression de vapeur.

8. Composition de transfert de chaleur comprenant la composition selon l'une des revendications 1 à 6 en tant que fluide de transfert de chaleur, et un ou plusieurs additifs choisis parmi les lubrifiants, les stabilisants, les tensioactifs, les agents traceurs, les agents fluorescents, les agents odorants, les agents de solubilisation et leurs mélanges.

9. Installation de transfert de chaleur comprenant un circuit de compression de vapeur contenant une composition selon l'une des revendications 1 à 6 en tant que fluide de transfert de chaleur ou contenant une composition de transfert de chaleur selon la revendication 8.

10. Installation selon la revendication 9, choisie parmi les installations mobiles ou stationnaires de chauffage par pompe à chaleur, de climatisation, de réfrigération et de congélation.

11. Procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition selon l'une des revendications 1 à 6.

12. Procédé selon la revendication 11, qui est un procédé de refroidissement d'un fluide ou d'un corps, dans lequel la température du fluide ou du corps refroidi est de -40°C à -10°C, et de préférence de -35°C à -25°C, de manière plus particulièrement préférée de -30°C à -20°C, et dans lequel le fluide de transfert de chaleur comprend :
- de 11 à 13 % en poids de difluorométhane ;
- de 58 à 62 % en poids de pentafluoroéthane ;
- de 18 à 29 % en poids de 2,3,3,3-tétrafluoropropène et
- de 0 à 7 % en poids de propane,
- de préférence de 11 à 13 % en poids de difluorométhane ;
- de 59 à 61 % en poids de pentafluoroéthane ;
- de 25 à 28 % en poids de 2,3,3,3-tétrafluoropropène et
- de 0 à 3 % en poids de propane, de préférence de 0 à 2 % en poids de propane, et
- avantageusement de 11 à 13 % de difluorométhane, de 61 à 63 % de pentafluoroéthane, de 24 à 26 % de 2,3,3,3-tétrafluoropropène et de 0,3 à 0,8 % de propane.

13. Procédé selon la revendication 11, qui est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C, et dans lequel le fluide de transfert de chaleur comprend :
- de 11 à 13 % en poids de difluorométhane ;
- de 58 à 62 % en poids de pentafluoroéthane ;
- de 18 à 29 % en poids de 2,3,3,3-tétrafluoropropène et
- de 0 à 7 % en poids de propane,
- de préférence de 11 à 13 % en poids de difluorométhane ;
- de 59 à 61 % en poids de pentafluoroéthane ;
- de 25 à 28 % en poids de 2,3,3,3-tétrafluoropropène et
- de 0 à 3 % en poids de propane, de préférence de 0 à 2 % en poids de propane, et
- avantageusement de 11 à 13 % de difluorométhane, de 61 à 63 % de pentafluoroéthane, de 24 à 26 % de 2,3,3,3-tétrafluoropropène et de 0,3 à 0,8 % de propane.

14. Procédé selon la revendication 11, qui est un procédé de chauffage d'un fluide ou d'un corps, dans lequel la température du fluide ou du corps chauffé est de 30°C à 80°C, et de préférence de 35°C à 55°C, de manière plus particulièrement préférée de 40°C à 50°C, et dans lequel le fluide de transfert de chaleur comprend :
- de 11 à 13 % en poids de difluorométhane ;
- de 58 à 62 % en poids de pentafluoroéthane ;
- de 18 à 29 % en poids de 2,3,3,3-tétrafluoropropène et
- de 0 à 7 % en poids de propane,
- de préférence de 11 à 13 % en poids de difluorométhane ;
- de 59 à 61 % en poids de pentafluoroéthane ;
- de 25 à 28 % en poids de 2,3,3,3-tétrafluoropropène et
- de 0 à 3 % en poids de propane, de préférence de 0 à 2 % en poids de propane, et
- avantageusement de 11 à 13 % de difluorométhane, de 61 à 63 % de pentafluoroéthane, de 24 à 26 % de 2,3,3,3-tétrafluoropropène et de 0,3 à 0,8 % de propane.

15. Procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition selon l'une des revendications 1 à 6.

16. Procédé selon la revendication 15, dans lequel le fluide de transfert de chaleur initial est un mélange ternaire de 52 % de 1,1,1-trifluoroéthane, de 44 % de pentafluoroéthane et de 4 % de 1,1,1,2-tétrafluoroéthane et dans lequel le fluide de transfert de chaleur final comprend :
- de 11 à 13 % en poids de difluorométhane ;
- de 58 à 62 % en poids de pentafluoroéthane ;
- de 18 à 29 % en poids de 2,3,3,3-tétrafluoropropène et
- de 0 à 7 % en poids de propane,
- de préférence de 11 à 13 % en poids de difluorométhane ;
- de 59 à 61 % en poids de pentafluoroéthane ;
- de 25 à 28 % en poids de 2,3,3,3-tétrafluoropropène et
- de 0 à 3 % en poids de propane, de préférence de 0 à 2 % en poids de propane et,
- avantageusement de 11 à 13 % de difluorométhane, de 61 à 63 % de pentafluoroéthane, de 24 à 26 % de 2,3,3,3-tétrafluoropropène et de 0,3 à 0,8 % de propane.

17. Procédé selon la revendication 15, dans lequel le fluide de transfert de chaleur initial est un mélange ternaire de 23 % de difluorométhane, de 25 % de pentafluoroéthane et de 52 % de 1,1,1,2-tétrafluoroéthane et dans lequel le fluide de transfert de chaleur final comprend :
- de 11 à 13 % en poids de difluorométhane ;
- de 58 à 62 % en poids de pentafluoroéthane ;
- de 18 à 29 % en poids de 2,3,3,3-tétrafluoropropène et
- de 0 à 7 % en poids de propane,
- de préférence de 11 à 13 % en poids de difluorométhane ;
- de 59 à 61 % en poids de pentafluoroéthane ;
- de 25 à 28 % en poids de 2,3,3,3-tétrafluoropropène et
- de 0 à 3 % en poids de propane, de préférence de 0 à 2 % en poids de propane, et
- avantageusement de 11 à 13 % de difluorométhane, de 61 à 63 % de pentafluoroéthane, de 24 à 26 % de 2,3,3,3-tétrafluoropropène et de 0,3 à 0,8 % de propane.

## Patentansprüche

1. Zusammensetzung, umfassend:
- 11 bis 13 Gew.-% Difluormethan;
- 58 bis 62 Gew.-% Pentafluorethan;
- 18 bis 29 Gew.-% 2,3,3,3-Tetrafluorpropen und
- 0 bis 7 Gew.-% Propan.

2. Zusammensetzung nach Anspruch 1, umfassend:
- 11 bis 13 Gew.-% Difluormethan;
- 59 bis 61 Gew.-% Pentafluorethan;
- 25 bis 28 Gew.-% 2,3,3,3-Tetrafluorpropen und
- 0 bis 3 Gew.-% Propan, vorzugsweise 0 bis 2 Gew.-%, Propan.

3. Zusammensetzung nach einem der vorhergehenden Ansprüche, **dadurch gekennzeichnet, dass** sie ternär ist.

4. Zusammensetzung nach einem der Ansprüche 1 bis 2, **dadurch gekennzeichnet, dass** sie quaternär ist.

5. Zusammensetzung nach Anspruch 1, bestehend aus:
- 12 (± 0,2) % Difluormethan;
- 60 (± 0,2) % Pentafluorethan und
- 28 (± 0,2) % 2,3,3,3-Tetrafluorpropen.

6. Zusammensetzung nach Anspruch 1, bestehend aus:
- 12 (± 1) % Difluormethan;
- 62 (± 1) % Pentafluorethan
- 0, 6 (± 0,2) % Propan und
- 24,4 (± 1) % 2,3,3,3-Tetrafluorpropen.

7. Verwendung einer Zusammensetzung nach einem der Ansprüche 1 bis 6 als Wärmeübertragungsfluid in einem Dampfverdichtungskreislauf.

8. Wärmeübertragungszusammensetzung, umfassend die Zusammensetzung nach einem der Ansprüche 1 bis 6 als Wärmeübertragungsfluid und ein oder mehrere Additive, die aus Schmiermitteln, Stabilisatoren, Tensiden, Tracern, Fluoreszenzmitteln, Geruchsmitteln, Solubilisatoren und Mischungen davon ausgewählt sind.

9. Wärmeübertragungsanlage, umfassend einen Dampfverdichtungskreislauf, der eine Zusammensetzung nach einem der Ansprüche 1 bis 6 als Wärmeübertragungsfluid enthält oder eine Wärmeübertragungszusammensetzung nach Anspruch 8 enthält.

10. Anlage nach Anspruch 9, die aus mobilen oder stationären Wärmepumpenheizanlagen, Klimaanlagen, Kühlanlagen und Gefrieranlagen ausgewählt ist.

11. Verfahren zum Erwärmen oder Abkühlen eines Fluids oder eines Körpers mittels eines Dampfverdichtungskreislaufs, der ein Wärmeübertragungsfluid enthält, bei dem man nacheinander das Wärmeübertragungsfluid verdampft, das Wärmeübertragungsfluid verdichtet, das Wärmeübertragungsfluid kondensiert und das Wärmeübertragungsfluid entspannt, wobei es sich bei dem Wärmeübertragungsfluid um eine Zusammensetzung nach einem der Ansprüche 1 bis 6 handelt.

12. Verfahren nach Anspruch 11, bei dem es sich um ein Verfahren zum Abkühlen eines Fluids oder eines Körpers handelt, wobei die Temperatur des abgekühlten Fluids oder Körpers -40 °C bis -10 °C und vorzugsweise -35 °C bis -25 °C, noch weiter bevorzugt -30 °C bis -20 °C, beträgt und wobei das Wärmeübertragungsfluid
- 11 bis 13 Gew.-% Difluormethan;
- 58 bis 62 Gew.-% Pentafluorethan;
- 18 bis 29 Gew.-% 2,3,3,3-Tetrafluorpropen und
- 0 bis 7 Gew.-% Propan,
- vorzugsweise 11 bis 13 Gew.-% Difluormethan;
- 59 bis 61 Gew.-% Pentafluorethan;
- 25 bis 28 Gew.-% 2,3,3,3-Tetrafluorpropen und
- 0 bis 3 Gew.-%, vorzugsweise 0 bis 2 Gew.-%, Propan und
- vorteilhafterweise 11 bis 13 % Difluormethan, 61 bis 63 % Pentafluorethan, 24 bis 26 % 2,3,3,3-Tetrafluorpropen und 0,3 bis 0,8 % Propan umfasst.

13. Verfahren nach Anspruch 11, bei dem es sich um ein Verfahren zum Abkühlen eines Fluids oder eines Körpers handelt, wobei die Temperatur des abgekühlten Fluids oder Körpers -15 °C bis 15 °C und vorzugsweise -10 °C bis 10 °C, noch weiter bevorzugt -5 °C bis 5 °C, beträgt und wobei das Wärmeübertragungsfluid
- 11 bis 13 Gew.-% Difluormethan;
- 58 bis 62 Gew.-% Pentafluorethan;
- 18 bis 29 Gew.-% 2,3,3,3-Tetrafluorpropen und
- 0 bis 7 Gew.-% Propan,
- vorzugsweise 11 bis 13 Gew.-% Difluormethan;
- 59 bis 61 Gew.-% Pentafluorethan;
- 25 bis 28 Gew.-% 2,3,3,3-Tetrafluorpropen und
- 0 bis 3 Gew.-% Propan, vorzugsweise 0 bis 2 Gew.-%, Propan und
- vorteilhafterweise 11 bis 13 % Difluormethan, 61 bis 63 % Pentafluorethan, 24 bis 26 % 2,3,3,3-Tetrafluorpropen und 0,3 bis 0,8 % Propan umfasst.

14. Verfahren nach Anspruch 11, bei dem es sich um ein Verfahren zum Erwärmen eines Fluids oder eines Körpers handelt, wobei die Temperatur des erwärmten Fluids oder Körpers 30 °C bis 80 °C und vorzugsweise 35 °C bis 55 °C, noch weiter bevorzugt 40 °C bis 50 °C, beträgt und wobei das Wärmeübertragungsfluid
- 11 bis 13 Gew.-% Difluormethan;
- 58 bis 62 Gew.-% Pentafluorethan;
- 18 bis 29 Gew.-% 2,3,3,3-Tetrafluorpropen und
- 0 bis 7 Gew.-% Propan,
- vorzugsweise 11 bis 13 Gew.-% Difluormethan;
- 59 bis 61 Gew.-% Pentafluorethan;
- 25 bis 28 Gew.-% 2,3,3,3-Tetrafluorpropen und
- 0 bis 3 Gew.-%, vorzugsweise 0 bis 2 Gew.-%, Propan und
- vorteilhafterweise 11 bis 13 % Difluormethan, 61 bis 63 % Pentafluorethan, 24 bis 26 % 2,3,3,3-Tetrafluorpropen und 0,3 bis 0,8 % Propan umfasst.

15. Verfahren zur Verringerung der Umweltbelastung durch eine Wärmeübertragungsanlage mit einem Dampfverdichtungskreislauf, der ein anfängliches Wärmeübertragungsfluid enthält, bei dem man das anfängliche Wärmeübertragungsfluid in dem Dampfverdichtungskreislauf durch ein letztendliches Wärmeübertragungsfluid ersetzt, wobei das letztendliche Wärmeübertragungsfluid ein kleineres GWP als das anfängliche Wärmeübertragungsfluid aufweist, wobei es sich bei dem letztendlichen Wärmeübertragungsfluid um eine Zusammensetzung nach einem der Ansprüche 1 bis 6 handelt.

16. Verfahren nach Anspruch 15, wobei es sich bei dem anfänglichen Wärmeübertragungsfluid um eine ternäre Mischung von 52 % 1,1,1-Trifluorethan, 44 % Pentafluorethan und 4 % 1,1,1,2-Tetrafluorethan handelt und das letztendliche Wärmeübertragungsfluid
- 11 bis 13 Gew.-% Difluormethan;
- 58 bis 62 Gew.-% Pentafluorethan;
- 18 bis 29 Gew.-% 2,3,3,3-Tetrafluorpropen und
- 0 bis 7 Gew.-% Propan,
- vorzugsweise 11 bis 13 Gew.-% Difluormethan;
- 59 bis 61 Gew.-% Pentafluorethan;
- 25 bis 28 Gew.-% 2,3,3,3-Tetrafluorpropen und
- 0 bis 3 Gew.-% Propan, vorzugsweise 0 bis 2 Gew.-%, Propan und
- vorteilhafterweise 11 bis 13 % Difluormethan, 61 bis 63 % Pentafluorethan, 24 bis 26 % 2,3,3,3-Tetrafluorpropen und 0,3 bis 0,8 % Propan umfasst.

17. Verfahren nach Anspruch 15, wobei es sich bei dem anfänglichen Wärmeübertragungsfluid um eine ternäre Mischung von 23 % Difluormethan, 25 % Pentafluorethan und 52 % 1,1,1,2-Tetrafluorethan handelt und das letztendliche Wärmeübertragungsfluid
- 11 bis 13 Gew.-% Difluormethan;
- 58 bis 62 Gew.-% Pentafluorethan;
- 18 bis 29 Gew.-% 2,3,3,3-Tetrafluorpropen und
- 0 bis 7 Gew.-% Propan,
- vorzugsweise 11 bis 13 Gew.-% Difluormethan;
- 59 bis 61 Gew.-% Pentafluorethan;
- 25 bis 28 Gew.-% 2,3,3,3-Tetrafluorpropen und
- 0 bis 3 Gew.-%, vorzugsweise 0 bis 2 Gew.-%, Propan und
- vorteilhafterweise 11 bis 13 % Difluormethan, 61 bis 63 % Pentafluorethan, 24 bis 26 % 2,3,3,3-Tetrafluorpropen und 0,3 bis 0,8 % Propan umfasst.

## Claims

1. Composition comprising:
- from 11% to 13% by weight of difluoromethane;
- from 58% to 62% by weight of pentafluoroethane;
- from 18% to 29% by weight of 2,3,3,3-tetrafluoropropene and
- from 0% to 7% by weight of propane.

2. Composition according to Claim 1, comprising:
- from 11% to 13% by weight of difluoromethane;
- from 59% to 61% by weight of pentafluoroethane;
- from 25% to 28% by weight of 2,3,3,3-tetrafluoropropene and
- from 0% to 3% by weight of propane, preferably from 0% to 2% by weight of propane.

3. Composition according to either one of the preceding claims, **characterized in that** it is ternary.

4. Composition according to either one of Claims 1 and 2, **characterized in that** it is quaternary.

5. Composition according to Claim 1, consisting of:
- 12 (±0.2)% of difluoromethane;
- 60 (±0.2)% of pentafluoroethane; and
- 28 (±0.2)% of 2,3,3,3-tetrafluoropropene.

6. Composition according to Claim 1, consisting of:
- 12 (±1)% of difluoromethane;
- 62 (±1)% of pentafluoroethane;
- 0.6 (±0.2)% of propane and
- 24.4 (±1)% of 2, 3, 3, 3-tetrafluoropropene.

7. Use of a composition according to one of Claims 1 to 6, as heat-transfer fluid in a vapour compression circuit.

8. Heat-transfer composition comprising the composition according to one of Claims 1 to 6 as heat-transfer fluid and one or more additives chosen from lubricants, stabilizing agents, surfactants, tracing agents, fluorescent agents, odorous agents, solubilizing agents and their mixtures.

9. Heat-transfer installation comprising a vapour compression circuit containing a composition according to one of Claims 1 to 6 as heat-transfer fluid or containing a heat-transfer composition according to Claim 8.

10. Installation according to Claim 9, chosen from mobile or stationary installations for heating by heat pump, for air conditioning, for refrigeration and for freezing.

11. Process for heating or cooling a fluid or a body by means of a vapour compression circuit containing a heat-transfer fluid, the said process successively comprising the evaporation of the heat-transfer fluid, the compression of the heat-transfer fluid, the condensation of the heat-transfer fluid and the expansion of the heat-transfer fluid, in which the heat-transfer fluid is a composition according to one of Claims 1 to 6.

12. Process according to Claim 11, which is a process for cooling a fluid or a body, in which the temperature of the cooled fluid or body is from
- 40°C to -10°C, and preferably from -35°C to
- 25°C, more particularly preferably from -30°C to
- 20°C, and in which the heat-transfer fluid comprises:
- from 11% to 13% by weight of difluoromethane;
- from 58% to 62% by weight of pentafluoroethane;
- from 18% to 29% by weight of 2,3,3,3-tetrafluoropropene and
- from 0% to 7% by weight of propane,
- preferably from 11% to 13% by weight of difluoromethane;
- from 59% to 61% by weight of pentafluoroethane;
- from 25% to 28% by weight of 2,3,3,3-tetrafluoropropene and
- from 0% to 3% by weight of propane, preferably from 0% to 2% by weight of propane, and
- advantageously from 11% to 13% of difluoromethane, from 61% to 63% of pentafluoroethane, from 24% to 26% of 2,3,3,3-tetrafluoropropene and from 0.3% to 0.8% of propane.

13. Process according to Claim 11, which is a process for cooling a fluid or a body, in which the temperature of the cooled fluid or body is from
- 15°C to 15°C, and preferably from -10°C to 10°C, more particularly preferably from -5°C to 5°C, and in which the heat-transfer fluid comprises:
- from 11% to 13% by weight of difluoromethane;
- from 58% to 62% by weight of pentafluoroethane;
- from 18% to 29% by weight of 2,3,3,3-tetrafluoropropene and
- from 0% to 7% by weight of propane,
- preferably from 11% to 13% by weight of difluoromethane;
- from 59% to 61% by weight of pentafluoroethane;
- from 25% to 28% by weight of 2,3,3,3-tetrafluoropropene and
- from 0% to 3% by weight of propane, preferably from 0% to 2% by weight of propane, and
- advantageously from 11% to 13% of difluoromethane, from 61% to 63% of pentafluoroethane, from 24% to 26% of 2,3,3,3-tetrafluoropropene and from 0.3% to 0.8% of propane.

14. Process according to Claim 11, which is a process for heating a fluid or a body, in which the temperature of the heated fluid or body is from 30°C to 80°C, and preferably from 35°C to 55°C, more particularly preferably from 40°C to 50°C, and in which the heat-transfer fluid comprises:
- from 11% to 13% by weight of difluoromethane;
- from 58% to 62% by weight of pentafluoroethane;
- from 18% to 29% by weight of 2,3,3,3-tetrafluoropropene and
- from 0% to 7% by weight of propane,
- preferably from 11% to 13% by weight of difluoromethane;
- from 59% to 61% by weight of pentafluoroethane;
- from 25% to 28% by weight of 2,3,3,3-tetrafluoropropene and
- from 0% to 3% by weight of propane, preferably from 0% to 2% by weight of propane, and
- advantageously from 11% to 13% of difluoromethane, from 61% to 63% of pentafluoroethane, from 24% to 26% of 2,3,3,3-tetrafluoropropene and from 0.3% to 0.8% of propane.

15. Process for reducing the environmental impact of a heat-transfer installation comprising a vapour compression circuit containing an initial heat-transfer fluid, the said process comprising a stage of replacement of the initial heat-transfer fluid in the vapour compression circuit by a final heat-transfer fluid, the final heat-transfer fluid exhibiting a lower GWP than the initial heat-transfer fluid, in which the final heat-transfer fluid is a composition according to one of Claims 1 to 6.

16. Process according to Claim 15, in which the initial heat-transfer fluid is a ternary mixture of 52% of 1,1,1-trifluoroethane, of 44% of pentafluoroethane and of 4% of 1,1,1,2-tetrafluoroethane and in which the final heat-transfer fluid comprises:
- from 11% to 13% by weight of difluoromethane;
- from 58% to 62% by weight of pentafluoroethane;
- from 18% to 29% by weight of 2,3,3,3-tetrafluoropropene and
- from 0% to 7% by weight of propane,
- preferably from 11 to 13% by weight of difluoromethane;
- from 59% to 61% by weight of pentafluoroethane;
- from 25% to 28% by weight of 2,3,3,3-tetrafluoropropene and
- from 0% to 3% by weight of propane, preferably from 0% to 2% by weight of propane, and
- advantageously from 11% to 13% of difluoromethane, from 61% to 63% of pentafluoroethane, from 24% to 26% of 2,3,3,3-tetrafluoropropene and from 0.3% to 0.8% of propane.

17. Process according to Claim 15, in which the initial heat-transfer fluid is a ternary mixture of 23% of difluoromethane, of 25% of pentafluoroethane and of 52% of 1,1,1,2-tetrafluoroethane and in which the final heat-transfer fluid comprises:
- from 11% to 13% by weight of difluoromethane;
- from 58% to 62% by weight of pentafluoroethane;
- from 18% to 29% by weight of 2,3,3,3-tetrafluoropropene and
- from 0% to 7% by weight of propane,
- preferably from 11 to 13% by weight of difluoromethane;
- from 59% to 61% by weight of pentafluoroethane;
- from 25% to 28% by weight of 2,3,3,3-tetrafluoropropene and
- from 0% to 3% by weight of propane, preferably from 0% to 2% by weight of propane, and
- advantageously from 11% to 13% of difluoromethane, from 61% to 63% of pentafluoroethane, from 24% to 26% of 2,3,3,3-tetrafluoropropene and from 0.3% to 0.8% of propane.
